# EUROPEAN PATENT APPLICATION

(11) **EP 2 230 800 A1**
(43) Date of publication of application: **22.09.2010**
(21) Application number: 09706072.7
(22) Date of filing: 12.01.2009
(51) Int. Cl.: H04L 12/46

(54) **METHOD FOR OBTAINING VIRTUAL PRIVATE NETWORK LABEL AND AUTONOMOUS SYSTEM BOUNDARY ROUTER DEVICE**

(30) Priority: 24.01.2008 CN 200810026008
(71) Applicant: Huawei Technologies Co., Ltd., Longgang District, Shenzhen Guangdong 518129 (CN)
(72) Inventor: LV, Hong c/o Huawei Technologies Co.Ltd., Int.Prop.Dept., Shenzhen (CN)
(74) Representative: Kreuz, Georg Maria
(86) International application number: PCT/CN2009/070095
(87) International publication number: WO 2009/094917

(57) **Abstract**

A method for acquiring a virtual private network (VPN) label is provided, in which the VPN is based on a multi-protocol label switching (MPLS) network. The method includes: acquiring VPN routing information; parsing the VPN routing information to obtain a VPN identifier, an upper-level router device identifier, and a receiving label; and acquiring a forwarding label according to the VPN identifier, the upper-level router device identifier, and the receiving label. The method is applied to an autonomous system boundary router (ASBR) device.

## Description

The application claims priority to Chinese Patent Application No. 200810026008.X, filed on January 24, 2008, and entitled "AUTONOMOUS SYSTEM BOUNDARY ROUTER DEVICE, AND METHOD FOR ACQUIRING VIRTUAL PRIVATE NETWORK LABEL", which is incorporated herein by reference in its entirety.

### FIELD OF THE TECHNOLOGY

The present invention relates to virtual private network (VPN) technologies, and more particularly to an autonomous system boundary router (ASBR) device, and a method for acquiring a VPN label.

### BACKGROUND OF THE INVENTION

A VPN is a virtual private communication network established by the Internet service provider (ISP) and network service provider (NSP) in the public network. The multi-protocol label switching (MPLS) VPN is a VPN applied in an MPLS network.

In an actual network, multiple devices of one VPN user may access devices in multiple autonomous system (AS) domains. The VPN connecting different AS domains requires a VPN cross-domain solution.

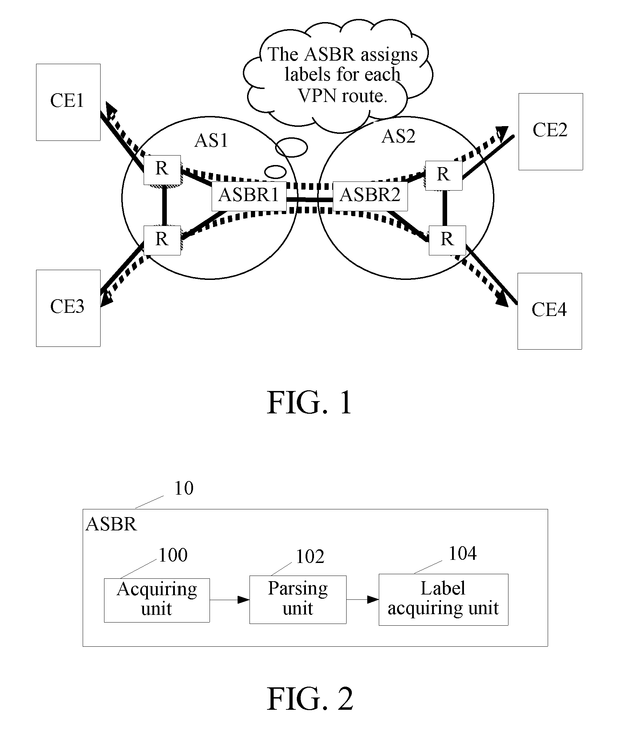

The networking of the most commonly used technical solution in the current MPLS VPN cross-domain solution is as shown in FIG. 1. In FIG. 1, customer edge (CE) stands for a customer edge device, and R stands for a provider edge (PE) device. Referring to FIG. 1, CE1 and CE2 are located in the same VPN, and one hundred VPN routes connecting CE1 with CE2 exist; while CE3 and CE4 are located in another VPN, and two hundred VPN routes connecting CE3 with CE4 exist.

In the implementation of the present invention, the inventor finds that the prior art has the following disadvantages.

Currently, on an ASBR, labels are assigned according to routes, so that ASBR1 and ASBR2 each need to assign 300 labels (one label for each route), and for different VPNs, the corresponding labels of different routes are assigned randomly. In this case, a large amount of label information needs to be maintained on ASBRs, and with the increase of users that access VPN, the label information that needs to be maintained by the ASBR may easily exceed the specification of the device.

Further, since the forwarding between different domains (e.g. between ASBR1 and ASBR2) is realized by using the MPLS technology, it is difficult to distinguish different VPN users, and only simple quality of service (QoS) can be achieved based on experimental use (EXP) in the label, where the EXP is originally reserved for experiment, but now used for QoS. Meanwhile, as the labels assigned for the VPN users between different domains are discontinuous, and the number of the labels between different domains is excessively large, hierarchical quality of service (HQoS) cannot be achieved. However, the bandwidth between different domains is generally limited, and important users and ordinary users cannot be distinguished without achieving the HQoS, so that packets are discarded randomly when congestion occurs between the ASBRs, and thus the services for important users can hardly be ensured.

### SUMMARY OF THE INVENTION

Accordingly, the present invention is directed to an ASBR device and a method for acquiring a VPN label, so as to reduce the number of the labels that need to be maintained on the ASBR device.

In order to achieve the above objects, in an embodiment, the present invention provides a method for acquiring a VPN label, where the VPN is based on an MPLS network. The method includes: acquiring VPN routing information; parsing the VPN routing information to obtain a VPN identifier, an upper-level router device identifier, and a receiving label; and acquiring a forwarding label according to the VPN identifier, the upper-level router device identifier, and the receiving label.

In another embodiment, the present invention provides an ASBR device, which includes: an acquiring unit, configured to acquire VPN routing information; a parsing unit, configured to parse the VPN routing information to obtain a VPN identifier, an upper-level router device identifier, and a receiving label; and a label acquiring unit, configured to acquire a forwarding label according to the VPN identifier, the upper-level router device identifier, and the receiving label obtained by the parsing unit.

In the embodiments of the present invention, the forwarding label is assigned according to an upper-level router device, and thus the number of labels assigned according to VPN routes between ASBRs is significantly reduced, that is, the required hardware resources such as label switched paths (LSPs) are reduced, and thus the situation that the number of the LSPs from exceeding the specification of the ASBR devices may be avoided.

### BRIEF DESCRIPTION OF THE DRAWINGS

FIG. 1 is a schematic diagram of networking in an existing MPLS VPN;
FIG. 2 is a schematic structural diagram of an ASBR according to a first embodiment of the present invention;
FIG. 3 is a schematic diagram illustrating the construction of a label acquiring unit in FIG. 2 according to an embodiment of a first embodiment;
FIG. 4 is a schematic structural diagram of an ASBR device according to a second embodiment of the present invention;
FIG. 5 is a schematic structural diagram of an ASBR device according to a third embodiment of the present invention; and
FIG. 6 is a schematic flow chart of a method for acquiring a VPN label according to an embodiment of the present invention.

### DETAILED DESCRIPTION OF THE EMBODIMENTS

The embodiments of the present invention are described below with reference to the accompanying drawings.

In order to reduce the number of labels that need to be maintained on the ASBR, in an embodiment, the present invention provides a new ASBR. FIG. 2 is a schematic structural diagram of an ASBR according to a first embodiment of the present invention. Referring to FIG. 2, the ASBR 10 includes an acquiring unit 100, a parsing unit 102, and a label acquiring unit 104.

The acquiring unit 100 is configured to acquire VPN routing information. The VPN routing information is from an upper-level router, which is a PE device. The VPN routing information includes a VPN identifier, an upper-level router device identifier, and a receiving label.

The parsing unit 102 is configured to parse the VPN routing information acquired by the acquiring unit 100 to obtain the VPN identifier, the upper-level router device identifier, and the receiving label. The VPN identifier is configured to identify a VPN which the information is from, and a route target (RTT) of a VPN route may be adopted as the VPN identifier. When the upper-level router device is a PE, an address of the PE may be adopted as the upper-level router device identifier. The receiving label is a label assigned for each VPN-instance by the upper-level router device, where the VPN-instance is an entity established and maintained on the PE for a VPN user, and each VPN user has a VPN-instance on the PE. When the upper-level router device is a PE, the same PE assigns different labels (that is, the receiving label in the routing information received by the ASBR) for different VPNs according to the RTTs of the VPNs. Since different PEs do not know the specific values of the forwarding label assigned by the other PEs for a certain VPN, the receiving labels assigned by the different PEs for different VPNs may be the same. For details, reference may be made to Table 1, where the receiving labels assigned by PE1 and PE2 for RTT 1:1 and 3:3 are both L1 (L1 is a numeric value generally greater than or equal to 16).

The label acquiring unit 104 is configured to acquire a forwarding label according to the VPN identifier, the upper-level router device identifier, and the receiving label obtained by the parsing unit 102 in the way of parsing the VPN routing information. For example, a forwarding label corresponding to certain information may be queried from existing records, and a new forwarding label may also be generated according to corresponding information. See the following description for details.

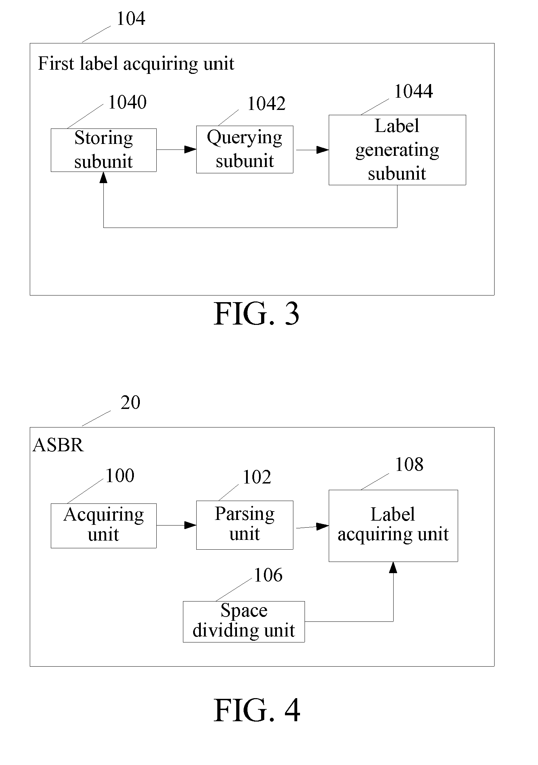

As shown in FIG. 3, the label acquiring unit 104 further includes a storing subunit 1040, a querying subunit 1042, and a label generating subunit 1044.

The storing subunit 1040 is configured to store a forwarding label record table. The forwarding label record table is configured to record mapping between the VPN identifier, the upper-level router device identifier, the receiving label, and the forwarding label, and the mapping follows a label generation rule for generating labels. The label generation rule may be a first label generation rule or a second label generation rule. The first label generation rule includes the following: When the upper-level router device identifiers and the receiving labels acquired from parsing twice or more are respectively identical, the forwarding labels corresponding to the upper-level router device identifiers and the receiving labels are the same. The second label generation rule is a label generation rule based on the division of the label space, where the second label generation rule includes the following: When the upper-level router device identifiers and the receiving labels acquired from parsing twice or more are respectively identical, the forwarding labels corresponding to the upper-level router device identifiers and the receiving labels are the same, and are located in the same label space with the value of the forwarding label corresponding to the same VPN identifier. The definition of the label space may refer to later explanation.

The querying subunit 1042 is configured to query in the forwarding label record table stored in the storing subunit 1040 to determine whether a forwarding label corresponding to the VPN identifier, the upper-level router device identifier, and the receiving label exists, and obtain a query result, in which if the query result indicates that the forwarding label record exists, the querying subunit 1042 obtains the forwarding label.

The label generating subunit 1044 is configured to generate a forwarding label according to a label generation rule when the querying subunit 1042 does not search out the forwarding label, and update the forwarding label record table stored in the storing subunit 1040.

Table 1 is an example of the forwarding label record table. It can be seen that, for the VPN routing information received each time, when any one of the PE address and the receiving label varies between different times, the forwarding labels are different (different rows representing different times in the table).

**Table 1**

| VPN RTT | PE address | Receiving label | Forwarding label |
|---|---|---|---|
| 1:1 | PE1 | L1 | 101 |
| 2:2 | PE1 | L2 | 201 |
| 3:3, 4:4 | PE2 | L1 | 301 |

Referring to FIG. 4, the ASBR 10 in FIG. 2 further includes a space dividing unit 106, configured to divide a value range of the forwarding label into different label spaces according to the VPN identifier. Similar to the receiving label, the forwarding label is also represented in numeric values, so the value range of the forwarding label may be divided according to different VPNs.

The label space division method may be that different label spaces are divided for different VPNs by configuring a start label of a label space and the number of labels that can be accommodated in the label space. When receiving the VPN routing information, the ASBR automatically generates label spaces for each VPN.

If the start label is configured to be 101 and the number of labels that can be accommodated in the label space is 100, for a VPN route with an RTT of 1:1, the value range of the forwarding label automatically assigned for the VPN is 101 to 200, the value range of the forwarding label automatically assigned for the VPN with an RTT of 2:2 is 201 to 300, and the rest can be deduced in the same manner, thus forming the division of the label spaces as shown in Table 2.

**Table 2**

| VPN RTT | Label space |
|---|---|
| 1:1 | 101∼200 |
| 2:2 | 201∼300 |
| ... | ... |

When the ASBR includes the space dividing unit, the label acquiring unit 104 in the ASBR 10 as shown in FIG. 2 acquires the forwarding label according to the second label acquiring rule, and is marked as a label acquiring unit 108 for distinguishing. As shown in FIG. 4, the label acquiring unit 108 is configured to acquire a forwarding label according to the VPN identifier, the upper-level router device identifier, and the receiving label obtained by the parsing unit 102 in the way of parsing the VPN routing information, and the second label generation rule. The second label generation rule includes the following: when the upper-level router device identifiers and the receiving labels acquired from parsing twice or more are respectively identical, the forwarding labels corresponding to the upper-level router device identifiers and the receiving labels are the same, and are located in the same label space with the value of the forwarding label (in other words, the forwarding label) corresponding to the same VPN identifier.

The label acquiring unit 108 may include: a storing subunit, configured to store a forwarding label record table, in which the forwarding label record table is configured to record mapping between the VPN identifier, the upper-level router device identifier, the receiving label, and the forwarding label, and the mapping follows the second label generation rule; a querying subunit, configured to query a forwarding label corresponding to the VPN routing information from the forwarding label record table stored in the second storing unit; and/or a second label generating subunit, configured to generate a forwarding label according to the second label generation rule when no forwarding label record exists in the forwarding label record table stored in the second storing subunit, and update the forwarding label record table.

The forwarding label record table generated according to the label spaces and the second label generation rule is as shown in Table 3.

**Table 3**

| VPN RTT | PE address | Receiving label | Forwarding label |
|---|---|---|---|
| 1:1 | PE1 | L1 | 101 |
| 1:1 | PE2 | L1 | 102 |
| ... | ... | ... | ... |
| 2:2 | PE1 | L2 | 201 |
| 2:2 | PE2 | L2 | 202 |
| ... | ... | ... | ... |
| 3:3 | PE2 | L3 | 301 |
| 4:4 | PE2 | L4 | 401 |
| ... | ... | ... | ... |

It should be noted that, when the PE address and the receiving label are identical, the forwarding labels are also the same. However, the receiving labels for different VPN RTTs corresponding to the same PE address are different. Therefore, the forwarding label record table as shown in Table 3 may be generated according to the second label generation rule. The ASBR may acquire forwarding labels according to the above forwarding label record table stored or generated by the ASBR.

As described above, since the label space is divided according to different VPNs, it is ensured that the forwarding labels for the same VPN are located in the same label space, the specific VPN that a forwarding label is corresponding to may be figured out when the forwarding label is acquired, and different strategies can be arranged for different VPNs according to the VPN identifiers on the ASBR.

On a forwarding layer of the ASBR, the corresponding strategy may be acquired according to the label range. While in the prior art, the label is assigned according to each VPN route, the assigned labels are not in the same range, and thus each label on the forwarding layer corresponds to a certain strategy, which occupies a lot of resources, thereby making it difficult to implement in practice due to insufficient resources.

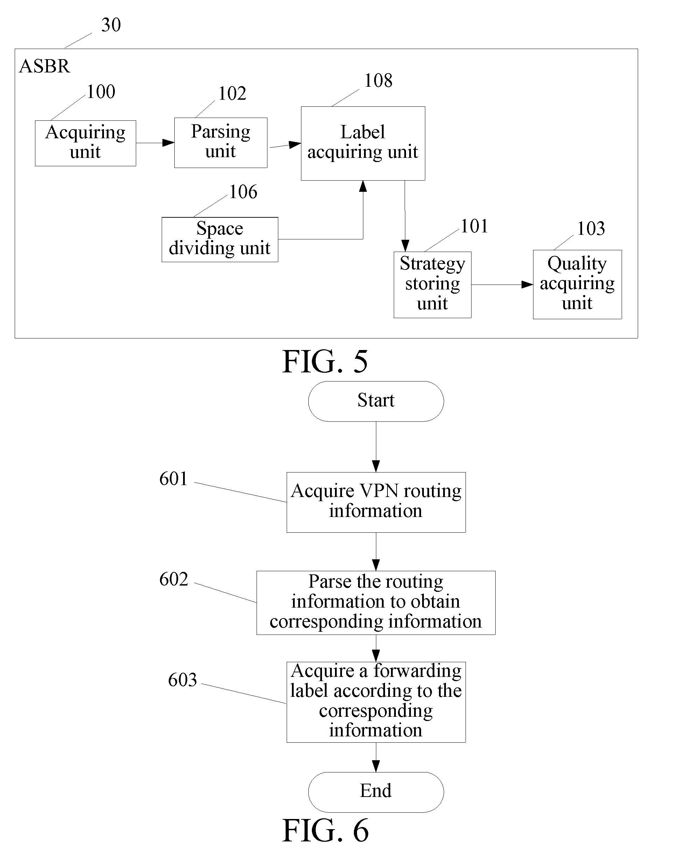

As shown in FIG. 5, the ASBR 10 in FIG. 2 may be an ASBR 30, which further includes a strategy storing unit 101, configured to store QoS strategies corresponding to various VPN identifiers; a quality acquiring unit 103, configured to acquire the VPN identifier corresponding to the forwarding label according to the label space where the value of the forwarding label is, then acquire the QoS strategy corresponding to the VPN identifier from the strategy storing unit, and perform corresponding operations according to the QoS strategy.

As the label range assigned for each VPN on the ASBR is continuous (that is, in continuous label spaces), the VPN corresponding to the forwarding label may be acquired from the forwarding label, that is, the forwarding layer of the ASBR may identify each VPN user according to the label range. In this manner, the ASBR can easily assign for each VPN the QoS strategies such as bandwidth, queue scheduling mode, discarding mechanism in congestion, and traffic shaping. Meanwhile, the VPN users can be distinguished into different levels according to the importance of the users on the ASBR, and different services are implemented for the users according to their levels, for example, the bandwidth and preferred queue scheduling algorithm are preferentially assigned for high priority users, thus achieving HQoS between different AS domains.

Accordingly, in an embodiment, the present invention further provides an MPLS-based method for acquiring a VPN label. As shown in FIG. 6, the method includes the following steps.

In step 601, an ASBR acquires VPN routing information. The VPN routing information is from an upper-level router device, for example, a PE device or other ASBRs. The VPN routing information includes a VPN identifier, an upper-level router device identifier, and a receiving label.

In step 602, the ASBR parses the VPN routing information to obtain the VPN identifier, the upper-level router device identifier, and the receiving label. The definitions of the VPN identifier, the upper-level router device identifier, and the receiving label are consistent with those described in the parsing unit 102 in FIG. 2.

In step 603, the ASBR acquires a forwarding label according to the VPN identifier, the upper-level router device identifier, and the receiving label. For example, a forwarding label corresponding to certain information may be queried from existing records, and a new forwarding label may also be generated according to corresponding information. See the following description for details.

A forwarding label record table may be adopted to record mapping between the VPN identifier, the upper-level router device identifier, the receiving label, and the forwarding label, as shown in Table 1 and Table 3. After receiving the VPN routing information, the ASBR looks up in the forwarding label record table according to the RTT+ PE address+ receiving label of the VPN route, and if a forwarding label is found in the table, the assigned forwarding label is obtained; while if no forwarding label is found in the table, a forwarding label is generated according to a corresponding rule and added in the table. The label generation rule may be a first label generation rule or a second label generation rule. The first label generation rule includes the following: When the upper-level router device identifiers and the receiving labels acquired from parsing twice or more are respectively identical, the forwarding labels corresponding to the upper-level router device identifiers and the receiving labels are the same. The second label generation rule is based on the division of the label space, see later description for details.

Meanwhile, a label space dividing strategy may also be preset in the ASBR, and the value range of the forwarding label is divided into different label spaces according to the VPN identifier. The dividing strategy of the ASBR is as shown in Table 2 and its relevant descriptions.

Accordingly, the values of the forwarding labels corresponding to different VPNs are in different label spaces, and the values of the forwarding labels corresponding to the same VPN are in the same label space. A forwarding label is generated according to the second label generation rule, and the second label generation rule includes the following: When the upper-level router device identifiers and the receiving labels acquired from parsing twice or more are respectively identical, the forwarding labels corresponding to the upper-level router device identifiers and the receiving labels are the same, and are located in the same label space with the forwarding label corresponding to the same VPN identifier.

In this manner, the VPN corresponding to the forwarding label may be acquired according to the range where the forwarding label is, and the HQoS is realized according to the forwarding label on the ASBR, which specifically includes the following steps.
a. The VPN identifier corresponding to the forwarding label is acquired according to the label space where the forwarding label is.
b. The corresponding QoS strategy is acquired according to the VPN identifier, and corresponding operations are performed according to the QoS strategy. The QoS strategy may include bandwidth, queue scheduling mode, discarding mechanism in congestion, and traffic shaping assigned for each VPN user. Since the VPN users can be easily identified by the forwarding labels, the VPN users may be set at different levels, and services of different qualities are provided according to the levels, thus realizing the control of HQoS.

In the embodiments of the present invention, the forwarding label is assigned according to the upper-level router device, and thus the number of labels assigned according to VPN routes between ASBRs is largely reduced, that is, the required hardware resources such as LSPs are reduced, thereby preventing the number of the LSPs from exceeding the specification of the ASBR devices.

Moreover, since the label spaces are divided, the VPN that the forwarding label serves can be easily figured out according to the range of the forwarding label, and different resource strategies are configured for different VPNs, thus ensuring the services for important customers and realizing the HQoS.

Through the descriptions of the preceding embodiments, those skilled in the art may understand that the present invention may be implemented by hardware only or by software and a necessary universal hardware platform. Based on such understandings, all or part of the technical solution under the present invention that makes contributions to the prior art may be essentially embodied in the form of a software product. The software product may be stored in a computer readable storage medium, such as a Read-Only Memory (ROM), a Random Access Memory (RAM), a magnetic disk, or a Compact Disk Read-Only Memory (CD-ROM). The software product includes a number of instructions that enable a computer device (personal computer, server, or network device) to execute the methods provided in the embodiments of the present invention.

The above descriptions are merely preferred embodiments of the present invention, but not intended to limit the scope of the present invention. Any modification, equivalent replacement, or improvement made according to the appended claims of the present invention should fall within the scope of the present invention.

## Claims

1. A method for acquiring a virtual private network (VPN) label, the VPN being based on a multi-protocol label switching (MPLS) network, wherein the method comprises:
acquiring VPN routing information;
parsing the VPN routing information to obtain a VPN identifier, an upper-level router device identifier, and a receiving label; and
acquiring a forwarding label according to the VPN identifier, the upper-level router device identifier, and the receiving label.

2. The method according to claim 1, wherein a forwarding label record table is configured to record mapping between the VPN identifier, the upper-level router device identifier, the receiving label, and the forwarding label, and the acquiring the forwarding label according to the VPN identifier, the upper-level router device identifier, and the receiving label comprises:
querying in the forwarding label record table whether a forwarding label corresponding to the VPN identifier, the upper-level router device identifier, and the receiving label exists, and obtaining a query result; and
obtaining the forwarding label, if the query result indicates that a record of the forwarding label exists; or directly generating a forwarding label according to a label generation rule, if the query result indicates that no record of the forwarding label exists in the forwarding label record table.

3. The method according to claim 2, wherein the label generation rule is a first label generation rule, and the first label generation rule comprises: When the upper-level router device identifiers and the receiving labels acquired from parsing twice or more are respectively identical, the generated forwarding labels corresponding to the upper-level router device identifiers and the receiving labels are the same.

4. The method according to claim 1, wherein
before the acquiring the forwarding label according to the VPN identifier, the upper-level router device identifier, and the receiving label, the method further comprises: dividing a value range of the forwarding label into different label spaces according to the VPN identifier; and
the acquiring the forwarding label according to the VPN identifier, the upper-level router device identifier, and the receiving label comprises: acquiring the forwarding label according to the VPN identifier, the upper-level router device identifier, the receiving label, and the label generation rule, wherein the label generation rule is a second label generation rule, and the second label generation rule comprises: when the upper-level router device identifiers and the receiving labels acquired from parsing twice or more are respectively identical, the generated forwarding labels corresponding to the upper-level router device identifiers and the receiving labels are the same, and are located in the same label space with the value of the forwarding label corresponding to the same VPN identifier.

5. The method according to any one of claims 1 to 4, wherein the acquiring the forwarding label according to the VPN identifier, the upper-level router device identifier, and the receiving label further comprises:
acquiring the VPN identifier corresponding to the forwarding label according to the label space where the value of the forwarding label is; and
acquiring a corresponding quality of service (QOS) strategy according to the VPN identifier, and performing corresponding operations according to the QoS strategy.

6. An autonomous system boundary router (ASBR) device, comprising:
an acquiring unit, configured to acquire virtual private network (VPN) routing information;
a parsing unit, configured to parse the VPN routing information acquired by the acquiring unit to obtain a VPN identifier, an upper-level router device identifier, and a receiving label; and
a label acquiring unit, configured to acquire a forwarding label according to the VPN identifier, the upper-level router device identifier, and the receiving label obtained by the parsing unit in the way of parsing.

7. The device according to claim 6, wherein the label acquiring unit comprises:
a storing subunit, configured to store a forwarding label record table, wherein the forwarding label record table is configured to record mapping between the VPN identifier, the upper-level router device identifier, the receiving label, and the forwarding label; and
a querying subunit, configured to query in the forwarding label record table stored in the storing subunit to determine whether a forwarding label corresponding to the VPN identifier, the upper-level router device identifier, and the receiving label exists, and obtain a query result, wherein if the query result indicates that the forwarding label record exists, the querying subunit obtains the forwarding label; or
the label acquiring unit further comprises:
a label generating subunit, configured to generate a forwarding label according to a label generation rule when the query result of the querying subunit indicates that no forwarding label record exists in the forwarding label record table stored in the storing subunit, and update the forwarding label record table.

8. The device according to claim 7, wherein the label generation rule is a first label generation rule, and the first label generation rule comprises: when the upper-level router device identifiers and the receiving labels acquired from parsing twice or more are respectively identical, the generated forwarding labels corresponding to the upper-level router device identifiers and the receiving labels are the same.

9. The device according to claim 7, further comprising:
a space dividing unit, configured to divide a value range of the forwarding label into different label spaces according to the VPN identifier, wherein
the label generation rule is a second label generation rule, and the second label generation rule comprises: when the upper-level router device identifiers and the receiving labels acquired from parsing twice or more are respectively identical, the generated forwarding labels corresponding to the upper-level router device identifiers and the receiving labels are the same, and are located in the same label space with the value of the forwarding label corresponding to the same VPN identifier.

10. The device according to claim 9, further comprising:
a strategy storing unit, configured to store quality of service (QOS) strategies corresponding to various VPN identifiers; and
a quality acquiring unit, configured to acquire the VPN identifier corresponding to the forwarding label according to the label space where the value of the forwarding label is, then acquire the QoS strategy corresponding to the VPN identifier from the strategy storing unit, and perform the operations according to the QoS strategy.
